# EUROPEAN PATENT SPECIFICATION

(11) **EP 2 277 784 B1**
(45) Date of publication and mention of the grant of the patent: **15.08.2012**
(21) Application number: 09750538.2
(22) Date of filing: 18.05.2009
(51) Int. Cl.: B65D 1/02, B65D 33/00, B65D 33/38

(54) **BAG CONTAINER**
BEUTELBEHÄLTER
RÉCIPIENT EN FORME DE SAC

(30) Priority: 21.05.2008 JP 2008132932; 21.05.2008 JP 2008132933; 21.05.2008 JP 2008132934
(43) Date of publication of application: 26.01.2011
(73) Proprietor: KAO CORPORATION, Tokyo 103-8210 (JP); Yoshino Kogyosho Co., Ltd., Tokyo 136-8531 (JP)
(72) Inventor: SAGARA, Koichi, Tokyo 131-0044 (JP); KAWAMATA, Shigeyuki, Tokyo 131-0044 (JP); INAGAWA, Yoshinori, Tokyo 131-0044 (JP); FUJINAMI, Susumu, Tokyo 103-8210 (JP); KUROSAWA, Takao, Tokyo 136-8531 (JP); KAMATA, Shigeo, Tokyo 136-8531 (JP)
(74) Representative: Vossius & Partner
(86) International application number: PCT/JP2009/059142
(87) International publication number: WO 2009/142176

(56) References cited:
- DE-A1-102006 055 236
- JP-A- 2000 318 721
- JP-A- 2004 059 141
- JP-A- 2004 059 141
- JP-A- 2005 041 553
- JP-A- 2005 170 392
- JP-A- 2005 239 212
- JP-A- 2007 008 510
- JP-A- 2007 099 302
- JP-A- 2007 106 456
- JP-B- 7 023 168
- US-A- 4 463 867

## Description

### Technical Field

The present invention relates to a bag container made by shaping its synthetic-resin container body by using a mold.

### Background Art

There are heretofore known bag containers, such as self-standing bags, that are made by shaping using a mold, such as by blow molding, to have a body portion including a bottom portion and a spout-forming portion, and can be placed on a surface-to-be-placed using the bottom portion as a placing surface. With such a bag container, the spout-forming portion is cut open to form a spout, and the enclosed contents are poured out from the spout.

In such containers, using a knife or scissors, for example, for cutting the spout-forming portion would be inconvenient and troublesome to unaccustomed users. In view of such circumstances, there have been disclosed blow-molded containers that have an annular easy-to-tear portion constituted of a thin portion to be torn or a narrow groove-like depression provided on the spout-forming portion along with a tab piece, to facilitate the operation of opening and forming the spout by allowing the easy-to-tear portion to be torn by being ripped away or torn off (see, for example, Japanese Patent Laid Open JP-A-2004-59141 and Japanese Patent Laid Open JP-A-2007-91259)

US 4,463,867 discloses a thermoplastic container according to the preamble of claim 1 which is blown, filled and hermetically sealed in a single forming and filling operation. The removable cap integrally formed therewith normally hermetically seals the container and has a peripheral side wall, a horizontal flange portion which merges with the neck portion and an annular groove which is formed in the horizontal flange portion and provides a weakened severing line for removing the cap. A pull tab having a narrow in width, vertically disposed tab flange is integrally connected with the horizontally extending flange potion and has means for gripping the pull tab to pivotally manipulate the pull tab outwardly from the container. The pull tab on being pivotally manipulated causes the horizontally extending flange portion to sever at the annular groove, thereby permitting the cap to be removed from the container.

DE-A-10 2006 055 236 discloses a packaging container made of plastic having a fixed wall part, produced by injection molding, and a detachable wall part, which are connected by a predetermined breaking zone. To open the container, the user has to pull a handle which is formed as a tear-off ring.

### Disclosure of the Invention

The present invention provides a bag container according to claim 1 including a synthetic-resin container body shaped by using a mold and having a body portion including a bottom portion and a spout-forming portion. A spout is formed by tearing an easy-to-tear portion of the spout-forming portion to tear off a to-be-torn-off portion thereof. The spout-forming portion has a central axis that is perpendicular or substantially perpendicular to a placing surface formed by the bottom portion, and is provided projecting upward from the body portion. An opening tab portion having an engagement hole or an engagement depression with which the ball of a finger is to engage is provided on the to-be-torn-off portion projecting on one side, with respect to the central axis of the spout-forming portion, toward a side surface of the body portion. The engagement hole or the engagement depression has a shape that guides the finger in such a manner that, when the easy-to-tear portion is to be torn, the ball of the finger engages with a circumferential edge portion of the engagement hole or the engagement depression while being oriented toward a substantially circumferential direction centering about an end of the easy-to-tear portion located on an opposite side, with respect to the central axis, from the side toward which the opening tab portion projects.

### Brief Description of the Drawings

[Fig. 1(a)] Fig. 1(a) is a front view of a bag container according to a preferred first embodiment of the present invention.
[Fig. 1(b)] Fig. 1(b) is a side view, viewing Fig. 1(a) from the right-hand side.
[Fig. 2] Fig. 2 is a front view of a primary section of the bag container according to the preferred first embodiment of the present invention.
[Fig. 3] Fig. 3 is a front view of a primary section of a bag container according to a preferred second embodiment of the present invention.
[Fig. 4(a)] Fig. 4(a) is a front view illustrating an example of another shape of an engagement hole or an engagement depression provided in an opening tab portion.
[Fig. 4(b)] Fig. 4(b) is a front view illustrating an example of another shape of an engagement hole or an engagement depression provided in the opening tab portion.
[Fig. 4(c)] Fig. 4(c) is a front view illustrating an example of another shape of an engagement hole or an engagement depression provided in the opening tab portion.
[Fig. 4(d)] Fig. 4(d) is a front view illustrating an example of another shape of an engagement hole or an engagement depression provided in the opening tab portion.
[Fig. 4(e)] Fig. 4(e) is a front view illustrating an example of another shape of an engagement hole or an engagement depression provided in the opening tab portion.
[Fig. 5(a)] Fig. 5(a) is a front view of a bag container according to a preferred third embodiment of the present invention.
[Fig. 5(b)] Fig. 5(b) is a side view, viewing Fig. 5(a) from the right-hand side.
[Fig. 6] Fig. 6 is a front view of a primary section of the bag container according to the preferred third embodiment of the present invention.
[Fig. 7] Fig. 7 is an enlarged cross-sectional view taken along line III-III of Fig. 5(a).
[Fig. 8(a)] Fig. 8(a) is an enlarged plan view viewing, from above, a to-be-torn-off portion of the bag container illustrated in Fig. 5(a).
[Fig. 8(b)] Fig. 8(b) is a cross-sectional view taken along line Y-Y of Fig. 6.

### Detailed Description of the Invention

The blow-molded container of JP-A-2004-59141 has a pair of adjacently-provided tab pieces sandwiching an annular groove (easy-to-tear portion) in a neck portion (spout-forming portion) from above and below. Holding each of the upper and lower tab pieces and applying a force in the parting direction, for example, will tear apart the annular groove, thus opening and forming a spout. JP-A-2004-59141 also discloses a container that has a tab piece provided above the annular groove in the neck portion and having a round hole for placing the finger. While the container is being placed in an upright state, the tab piece is pinched to tear apart the annular groove.

However, in the blow-molded container of JP-A-2004-59141 having the upper and lower tab pieces sandwiching the annular groove, the tab pieces are difficult to hold because the upper and lower tab pieces are provided close to one another. Further, these tab pieces have a substantially smooth surface, which makes it difficult to determine the optimum direction for applying the force for tearing away the annular groove, thus making it quite likely that the operation of opening the container is performed while the container is being lifted. This makes the container unstable, and also gives rise to the possibility that the container may swing around due to the force upon opening and the contents may spill. Further, even with the container including the tab piece having the round finger-placing hole, the round finger-placing hole will not help to determine the optimum direction for applying the force for tearing away the annular groove. Rather, the tab piece having the round finger-placing hole is prone to be pulled directly upward, which makes it difficult for the pulling-up force to be efficiently transmitted as the force for tearing away the annular groove. Thus, the container often requires additional movement, such as twisting of the wrist, in addition to involving the above-mentioned problems.

Further, with the blow-molded container of JP-A-2004-59141, there are instances in which the bottom portion of the container is pressed down against the surface-to-be-placed while holding the neck portion or the lower tab piece below the annular groove, and in this state, the annular groove is torn away by pulling up the upper tab piece. In this case, however, the pressing-down force is applied in a direction substantially along the axial direction of the neck portion and thus cannot effectively oppose the momental force produced upon pulling the upper tab piece upward, resulting in lack of stability upon opening.

Meanwhile, the bag container disclosed in JP-A-2007-91259 also allows a spout to be formed by cutting off a to-be-torn-off portion located in a region more toward the tip end than the easy-to-tear portion of the spout-forming portion. In order to facilitate the tearing operation for forming the spout, cave-in portions or bulged portions are formed non-consecutively on the to-be-torn-off portion in the circumferential direction of the spout-forming portion.

However, according to the bag container disclosed in JP-A-2007-91259, forming the cave-in portions or bulged portions makes the interior shape of the to-be-torn-off portion complicated, which tends to cause liquid to accumulate inside the to-be-torn-off portion. The accumulation of liquid is caused by splashing or scattering of the content liquid due to vibrations upon distribution. Accumulation of liquid inside the to-be-torn-off portion may in turn cause the liquid inside the to-be-torn-off portion to scatter onto the surroundings upon tearing the easy-to-tear portion and opening the spout.

The present invention relates to a bag container that, upon placing the ball of a finger in engagement with an engagement hole or an engagement depression provided in a tab portion of a spout-forming portion and pulling the tab portion upward, allows the pulling-up force to be transmitted efficiently as a force for tearing an easy-to-tear portion and thereby allows the operation of opening and forming a spout to be performed easily and smoothly.

Further, the present invention provides a bag container that allows the operation of holding and pulling upward a tab portion provided on a spout-forming portion and thereby opening and forming a spout to be performed in a stable state with the bottom portion being pressed against a surface-to-be-placed.

Furthermore, the present invention provides a bag container that, upon tearing, such as by ripping away or tearing away, an easy-to-tear portion of a spout-forming portion to form an opening, prevents stretching of the to-be-torn-off portion etc. and facilitates the tearing operation for forming the opening, and that also reduces the tendency for contents, such as liquid, to accumulate inside the to-be-torn-off portion as well as provides good moldability using a mold.

The present invention provides a bag container including a synthetic-resin container body shaped by using a mold and having a body portion including a bottom portion and a spout-forming portion. A spout is formed by tearing an easy-to-tear portion of the spout-forming portion to tear off a to-be-torn-off portion thereof. The spout-forming portion has a central axis that is perpendicular or substantially perpendicular to a placing surface formed by the bottom portion, and is provided projecting upward from the body portion. An opening tab portion having an engagement hole or an engagement depression with which the ball of a finger is to engage is provided on the to-be-torn-off portion projecting on one side, with respect to the central axis of the spout-forming portion, toward a side surface of the body portion. The engagement hole or the engagement depression has a shape that guides the finger in such a manner that, when the easy-to-tear portion is to be torn, the ball of the finger engages with a circumferential edge portion of the engagement hole or the engagement depression while being oriented toward a substantially circumferential direction centering about an end of the easy-to-tear portion located on an opposite side, with respect to the central axis, from the side toward which the opening tab portion projects.

Further, it is preferable that in the bag container of the present invention, a holding tab portion is provided on a shoulder of the body portion on the side toward which the opening tab portion projects, the holding tab portion projecting upward while being spaced apart from the spout-forming portion.

Furthermore, it is preferable that in the bag container of the present invention, the to-be-torn-off portion is provided with a flat-shaped dome portion having a cavity inside, the opening tab portion is provided projecting on one side, with respect to the central axis of the spout-forming portion, toward the side surface of the body portion and is provided in a connected manner to a top surface of the dome portion, and a portion of the opening tab portion that is provided in a connected manner to the top surface of the dome portion constitutes a connection base portion having a cavity portion.

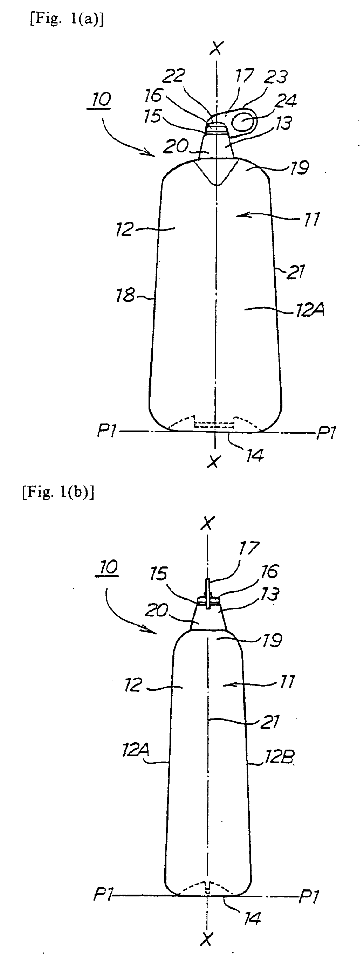

A bag container 10 according to a preferred first embodiment of the present invention illustrated in Figs. 1(a) and 1(b) is shaped by employing blow molding, such as direct blow molding or injection blow molding, as the "shaping using a mold". Further, the bag container 10 of the present first embodiment is used as a refill bag container that contains, for example, a liquid agent-particularly, a shampoo, a body wash, a liquid detergent, a cleaning agent, etc.-as its contents in an enclosed state and that is opened upon use for refilling another container with the contents. Further, the bag container 10 of the present first embodiment has a structure that allows the operation of cutting a portion of a spout-forming portion 13 provided projecting outward from a body portion 12 of a container body 11 and thereby opening and forming a spout to be performed easily and smoothly in a stable state.

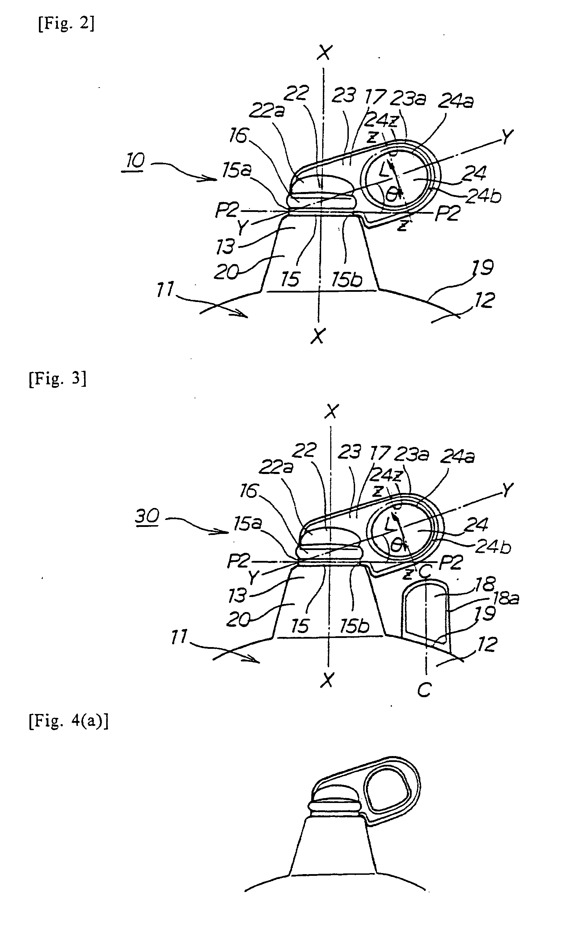

The bag container 10 of the present first embodiment is a self-standable bag container including a synthetic-resin container body 11 shaped by using a mold and having a body portion 12 including a bottom portion 14 and a spout-forming portion 13, and a spout is formed by tearing an easy-to-tear portion 15 of the spout-forming portion 13 and removing a to-be-torn-off portion 16 located in a region more toward the tip end than the easy-to-tear portion 15. The spout-forming portion 13 has a central axis that is perpendicular or substantially perpendicular to a placing surface P1, and is provided projecting upward (for example, in a direction that becomes the vertically-upward direction when the container is placed on a horizontal surface with its bottom portion 14 down) from the body portion 12. Further, also as illustrated in Fig. 2, an opening tab piece 17, serving as an opening tab portion, having an engagement hole 24 with which the ball of a finger is to engage is provided on the to-be-torn-off portion 16, projecting on one side, with respect to the central axis X of the spout-forming portion 13, toward a side surface of the body portion 12 (in the present embodiment, on the right-hand side with respect to the central axis X of the spout-forming portion of Fig. 2). The engagement hole 24 has a shape that can guide the finger in such a manner that, when the easy-to-tear portion 15 is to be torn, the ball of the finger engages with a circumferential edge portion 24a of the engagement hole 24 from the inner side thereof while being oriented toward a circumferential direction L that is within a virtual plane including the opening tab portion (opening tab piece 17) and that centers about an end 15a of the easy-to-tear portion 15 located on the opposite side, with respect to the central axis X of the spout-forming portion 13, from the side toward which the opening tab piece 17 projects (in other words, oriented in a direction Z that intersects, perpendicularly or substantially perpendicularly, with an axis Y connecting the end 15a and the center of the engagement hole or the engagement depression).

Further, in the present first embodiment, the opening tab piece 17 is provided projecting obliquely upward at an angle of inclination θ of 5 to 35 degrees with respect to a plane P2 including the easy-to-tear portion 15 and parallel to the placing surface P1. Further, the circumferential edge portion 24a of the engagement hole 24 with which the ball of a finger is to engage is a portion that intersects with a direction perpendicular or substantially perpendicular to the obliquely-upward projecting direction Y (i.e., that intersects with the minor-axis direction Z of the elliptical shape in cases where the engagement hole 24 has an elliptical shape). Furthermore, the engagement hole 24 has an elliptical shape, and its minor-axis direction Z is provided along the circumferential direction L centering about the end 15a of the easy-to-tear portion 15. That is, the minor-axis direction Z substantially coincides with the tangential direction of the circumferential direction L.

In the present first embodiment, the synthetic-resin container body 11 is formed, preferably by blow molding, into a shape that has a body portion 12 including a bottom portion 14 and the spout-forming portion 13. Various known molding techniques, such as direct blow molding or injection blow molding, may be adopted for blow molding.

Further, it is possible to adopt, as the synthetic-resin material for forming the container body 11, a single layer of, for example, a soft synthetic-resin material including a polyolefin-based resin, such as LDPE (low-density polyethylene), L-LDPE (linear low-density polyethylene) and OPP (oriented polypropylene), or a polyester-based resin such as PET (polyethylene terephthalate). It is also possible to adopt laminated resins obtained by laminating the above synthetic resin(s) and other synthetic resin(s). For example, it is possible to adopt a laminated resin employing LDPE or L-LDPE for its inner layer and HDPE (high-density polyethylene) for its outer layer. Further, it is also possible to adopt a resin obtained by laminating EVOH resin (ethylene-vinyl alcohol copolymer resin), EVA resin (ethylene-vinyl acetate copolymer resin), nylon resin, etc., or a blended resin obtained by blending resins, such as EVA, EVOH, and nylon, with another resin such as PE (polyethylene).

According to the present first embodiment, blow molding using the above-described synthetic-resin material(s) allows the side edges of the front portion 12A and the side edges of the back portion 12B to be contiguous via a parting lines 21 of the mold sandwiched in between, in the cross section traversing the body portion 12. This provides the body portion 12 of the container body 11 which has a hollow cross-sectional shape having either an elliptical shape or a rectangular shape with rounded corner and also has a flat shape that is broad when viewed from the front or the rear and narrow when viewed from the side. Further, through the blow molding, the container body 11 is formed so that the lower edge of the body portion 12 is integrally formed with the bottom portion 14, and into such a shape that the upper portion of the body portion 12 is gradually tapered, forming the shoulder 19 and that the spout-forming portion 13 projects upward from the central portion of the shoulder 19 as a mouth/neck portion.

The body portion 12 and the bottom portion 14 of the synthetic-resin container body 11 are preferably molded to a thickness of 100 µm or above in order to ensure a stable self-standing ability. Further, it is preferable to mold the body portion 12 and the bottom portion 14 to a thickness of, for example, 700 µm or below, and more preferably, a thickness of 500 µm or below, in order to provide suitable flexibility, allow squashing, folding, and/or bending, and allow the container body to be substantially flattened.

In the present first embodiment, the spout-forming portion 13 projecting upward from the central portion of the shoulder 19 of the body portion 12 includes a base portion 20, and a to-be-torn-off portion 16 that is provided in a connected manner to the upper end of the base portion 20 via an easy-to-tear portion 15 and that closes off the upper-end opening (the spout) of the base portion 20. The base portion 20 is shaped generally like a hollow truncated cone that gradually tapers toward the tip end, and is provided projecting upward from the shoulder 19 of the body portion 12, with its central axis X oriented in a direction perpendicular to the placing surface P1.

Further, in the present first embodiment, the easy-to-tear portion 15 that has a narrow groove-like depression formed annularly around the outer circumferential surface of the spout-forming portion 13 sections the spout-forming portion 13 into the base portion 20 below the easy-to-tear portion 15 and the to-be-torn-off portion 16 thereabove. The bag container 10 is brought to an opened state from its sealed state by tearing off the to-be-torn-off portion 16, which is located in a region more toward the tip end than the easy-to-tear portion 15, from the base portion 20 to form a spout.

Herein, the narrow groove-like depression constituting the easy-to-tear portion 15 is formed of a narrow groove having, for example, a substantially V-shaped cross-sectional shape and preferably along a plane P2 that is parallel to the placing surface P1 formed by the bottom portion 14. Further, it is preferable that the deepest portion of the narrow groove-like depression, or the portion thereof where the two surfaces forming the groove intersect with one another, is made thin to facilitate tearing.

The to-be-torn-off portion 16, which is provided in a connected manner to the upper end of the base portion 20 via the easy-to-tear portion 15, has a disk-like shape and closes off the spout by being arranged so as to cover the upper-end opening (the spout) of the base portion 20 and being integrally molded with the base portion 20 and the easy-to-tear portion 15. An opening tab piece 17 having an engagement hole 24 is provided in a connected manner to and integrally molded with the upper surface of the to-be-torn-off portion 16. The opening tab piece 17 is provided on one side with respect to the central axis X of the spout-forming portion 13, extending in the diametral direction of a plane along the parting line 21 of the mold for molding (i.e., in the direction of the side edge of the front portion 12A or the back portion 12B). Herein, the "plane along the parting line 21" is a virtual plane including the parting line 21.

In the present first embodiment, the opening tab piece 17 is a portion functioning as the opening tab portion for tearing open the easy-to-tear portion 15. The opening tab piece 17 has a flat plate-like shape, and has a joint base-end portion 22, and a substantially oval-shaped overhanging engagement portion 23 that is provided projecting from the joint base-end portion 22 on one side with respect to the central axis X of the spout-forming portion 13, a portion of the overhanging engagement portion 23 overlapping with the spout-forming portion 13 being cut away.

The joint base-end portion 22 is a portion that is joined in a connected manner along the outer circumferential surface of the to-be-torn-off portion 16, and the section connected to the upper surface of the to-be-torn-off portion 16 is made into a thick stepped portion 22a. Providing the thick stepped portion 22a at the section of the joint base-end portion 22 continuous with the upper surface of the to-be-torn-off portion 16 effectively reinforces the section joined and connected to the to-be-torn-off portion 16. This allows the pulling-up load exerted upon pulling the opening tab piece 17 upward to tear the easy-to-tear portion 15 to be efficiently transmitted, as a compressive load, to a portion of the to-be-torn-off portion 16 located on the opposite side, with respect to the central axis X of the spout-forming portion 13, from the side toward which the overhanging engagement portion 23 projects. As a result, tearing can be initiated from an end 15b of the easy-to-tear portion 15 located on the side toward which the overhanging engagement portion 23 projects with respect to the central axis X of the spout-forming portion 13, while utilizing as a fulcrum the end 15a of the easy-to-tear portion 15 located on the opposite side, with respect to the central axis X of the spout-forming portion 13, from the side toward which the overhanging engagement portion 23 projects, thus making it possible to tear the easy-to-tear portion 15 more smoothly.

The overhanging engagement portion 23 is a portion provided to project from the joint base-end portion 22 in such a manner as to overhang the upper area of the shoulder 19 of the container body 11, and its outer circumferential edge is formed as a thick rim portion 23a. Further, the overhanging engagement portion 23 has an elliptical engagement hole 24 opened in a portion on the tip-end side of the overhang, the circumferential edge of the opening of the engagement hole 24 being rimmed by a thick rim portion 24b.

Further, in the present embodiment, the elliptical engagement hole 24 is arranged so that its minor-axis direction Z is substantially along the circumferential direction L centering about the end 15a, which functions as the fulcrum of the easy-to-tear portion 15. In other words, the minor axis of the elliptical engagement hole 24 is an axis that substantially coincides with a tangent of the circumference of a circle centering about the end 15a. Accordingly, at the time of performing the operation of inserting a finger into the engagement hole 24 for engagement therewith and pulling up the opening piece 17, the ball of the finger can press against a portion 24z of the engagement hole 24 where the curve is gentlest (i.e., an intersection point between the minor-axis direction Z and the inner circumferential surface of the thick rim portion 24b), and while doing so, a force can be applied easily in the circumferential direction L centering about the end 15a, which functions as the fulcrum of the easy-to-tear portion 15. This makes it possible to tear the easy-to-tear portion 15 even more smoothly.

In the present first embodiment, the elliptical engagement hole 24 is opened to have such a size that, for example, its minor axis is around 10 to 15 mm and its major axis is around 10 to 20 mm, and as described above, is arranged so that its minor-axis direction Z is along the circumferential direction L centering about the end 15a, which functions as the fulcrum of the easy-to-tear portion 15. Further, in the present first embodiment, the substantially oval overhanging engagement portion 23 and the elliptical engagement hole 24 of the opening tab piece 17 are provided so that their major-axis direction Y is oriented in a direction inclined preferably at an angle of inclination θ of 5 to 35 degrees with respect to a plane P2 in which the easy-to-tear portion 15 is formed and that is parallel to the placing surface P1 (i.e., that is a plane perpendicular to the central axis X of the spout-forming portion 13).

Setting the angle of inclination θ to 5 to 35 degrees allows the pulling-up load exerted upon pulling up the opening tab piece 17 to tear the easy-to-tear portion 15 to be efficiently transmitted, as a compressive load, to a portion of the to-be-torn-off portion 16 located on the opposite side, with respect to the central axis X of the spout-forming portion 13, from the side toward which the overhanging engagement portion 23 projects. As a result, tearing can be initiated from the end 15b of the easy-to-tear portion 15 located on the side toward which the overhanging engagement portion 23 projects with respect to the central axis X of the spout-forming portion 13, while utilizing, as a fulcrum, the end 15a of the easy-to-tear portion 15 located on the opposite side, with respect to the central axis X of the spout-forming portion 13, from the side toward which the overhanging engagement portion 23 projects. This makes it possible to tear the easy-to-tear portion 15 more smoothly, thus achieving the advantage of allowing the pulling-up load to be reduced.

The range for the above-mentioned angle θ is described in detail. From the standpoint of allowing the container to be opened reliably without causing torsional tearing, the angle θ is 35 degrees or below, and preferably 30 degrees or below, and more preferably 25 degrees or below. On the other hand, from the standpoint of reducing the force for opening, the angle θ is 5 degrees or above, and preferably 10 degrees or above, and more preferably 20 degrees or above.

According to the bag container 10 of the present first embodiment having the above-described structure, upon placing the ball of a finger in engagement with the engagement hole 24 provided in the opening tab piece 17 of the spout-forming portion 13 and pulling the opening tab piece 17 upward, the pulling-up force can be transmitted efficiently as a force for tearing the easy-to-tear portion 15, and thereby the operation of opening and forming a spout can be performed easily and smoothly.

More specifically, according to the present first embodiment, the opening tab piece 17 having the preferably elliptical engagement hole 24 with which the ball of a finger is to engage is provided on the to-be-torn-off portion 16, projecting on one side with respect to the central axis X of the spout-forming portion 13 and extending in the diametral direction along the parting line 21 of the mold for molding (i.e., in the direction of the side edge of the front portion 12A or the back portion 12B). Further, the engagement hole 24 is arranged so that the minor-axis direction Z of the elliptical shape is along the circumferential direction L centering about the end 15a, which functions as the fulcrum of the easy-to-tear portion 15. Accordingly, at the time of performing the operation of tearing the easy-to-tear portion 15 by inserting a finger into the engagement hole 24 for engagement therewith and pulling up the opening tab piece 17, the ball of the finger will be guided naturally so that it engages, from the inner side, the circumferential edge portion 24a in a section (24z) of the engagement hole 24 where the circumferential edge portion 24a intersects with the minor-axis direction Z and the curve is gentlest. As a result, a force for pulling up the opening tab piece 17 can be easily applied by the ball of the finger toward the circumferential direction L centering about the end 15a of the easy-to-tear portion 15 located on the opposite side, with respect to the central axis X of the spout-forming portion 13, from the side toward which the opening tab piece 17 projects. Thus, the pulling-up force can be transmitted efficiently to the to-be-torn-off portion 16 as a force for tearing the easy-to-tear portion 15, and thereby the operation of opening and forming a spout can be performed easily and smoothly.

Further, in the present first embodiment, the circumferential edge of the opening of the engagement hole 24 is rimmed by a thick rim portion 24b. Thus, the ball of a finger can be pressed against the circumferential edge portion 24a in a section intersecting with the minor-axis direction Z by means of the thick rim portion 24b, thereby allowing the force for pulling up the opening tab piece 17 to be applied in a more stable state.

Fig. 3 illustrates a primary section of a bag container 30 according to a preferred second embodiment of the present invention. In addition to the structure of the bag container 10 of the foregoing first embodiment, the bag container 30 of the present second embodiment includes a holding tab piece 18, which serves as a holding tab portion, provided on the shoulder 19 of the body portion 12 adjacent to the spout-forming portion 13 on the side, with respect to the central axis X of the spout-forming portion 13, toward which the opening tab piece 17 overhangs (projects) in the diametral direction along the parting line 21 of the mold for molding (i.e., in the direction of the side edge of the front portion 12A or the back portion 12B), the holding tab piece 18 projecting upward while being spaced apart from the spout-forming portion 13.

Further, in the present second embodiment, the holding tab piece 18 is provided in such a manner that its central axis C is arranged parallel to or substantially parallel to the central axis X of the spout-forming portion 13, and the opening tab piece 17 and the holding tab piece 18 are provided within a plane along the parting line 21 of the mold for molding. Herein, the "plane along the parting line 21" is a virtual plane including the parting line 21.

More specifically, in the present second embodiment, the holding tab piece 18 provided adjacent to the spout-forming portion 13 on the side toward which the overhanging engagement portion 23 of the opening tab piece 17 projects is a portion functioning as the holding tab portion that is held when the easy-to-tear portion 15 is to be torn and opened. Like the opening tab piece 17, the holding tab piece 18 is provided having a flat plate-like shape within the plane along the parting line 21 of the mold for molding. The holding tab piece 18 is provided on the shoulder 19 of the body portion 12 of the container body 11, projecting upward therefrom up to a height that does not interfere with the overhanging engagement portion 23 of the opening tab piece 17 while being spaced apart from the spout-forming portion 13 such that there is a spacing, preferably around 8 to 12 mm, from the circumferential surface of the spout-forming portion 13. Keeping a spacing of around 8 to 12 mm between the holding tab piece 18 and the circumferential surface of the spout-forming portion 13 will allow, for example, the mouth/neck portion of another container to be arranged in a sandwiched state between the spout-forming portion 13 and the holding tab piece 18 when the contents filled and placed inside the container body 11 are to be poured from the spout of the spout-forming portion 13, which is formed by removing the to-be-torn-off portion 16, through the mouth/neck portion of that other container, thus allowing the contents to be poured into the other container in a stable state.

Further, in the present embodiment, the holding tab piece 18 is provided in such a manner that its center line C is arranged parallel to or substantially parallel to the central axis X of the spout-forming portion 13. Further, it is preferable that the circumferential edge of the holding tab piece 18 is formed as a thick rim portion 18a, and that the front and back surfaces in a region within the rim portion 18a are provided with appropriate anti-slip means, such as by emboss processing.

The bag container 30 of the present second embodiment having the above-described structure not only achieves the same effects as those of the bag container 10 of the foregoing first embodiment, but also allows the operation of holding and pulling upward the opening tab piece 17 provided on the spout-forming portion 13 and thereby opening and forming a spout to be performed in a stable state with the bottom portion 14 being pressed against the surface-to-be-placed.

More specifically, in the present second embodiment, the spout-forming portion 13 has a central axis X that is perpendicular or substantially perpendicular to the placing surface P1 formed by the bottom portion 14, and is provided projecting upward. Further, the opening tab piece 17 is provided on the to-be-torn-off portion 16, projecting on one side, with respect to the central axis X of the spout-forming portion 13, in the diametral direction along the parting line 21 of the mold for molding (i.e., in the direction of the side edge of the front portion 12A or the back portion 12B). Furthermore, the holding tab piece 18 is provided projecting upward, while being spaced apart from the spout-forming portion 13, on the shoulder 19 of the body portion 12 adjacent to the spout-forming portion 13 on the side toward which the opening tab piece 17 projects. Accordingly, at the time of holding the opening tab piece 17 by placing a finger in engagement with the engagement hole 24 and pulling up the opening tab piece 17 being held while, for example, the bag container 30 is placed in an upright state on the surface-to-be-placed, it becomes possible to easily produce a momental force of a considerable magnitude that opposes the momental force caused by the pulling-up load exerted by utilizing, as a fulcrum, the end 15a of the easy-to-tear portion 15 located on the opposite side, with respect to the central axis X of the spout-forming portion 13, from the side toward which the overhanging engagement portion 23 projects, simply by holding the holding tab piece 18-which is located at a distance equal to or more than a distance from the fulcrum end 15a to the point of action of the pulling-up load on the opening tab piece 17 (i.e., the distance between 15a and 24z)-and pressing the bottom portion 14 of the bag container 30 against the surface-to-be-placed. This allows the easy-to-tear portion 15 to be torn in a stable state while effectively opposing the momental force produced upon pulling up the opening tab piece 17, thus allowing the bag container 30 enclosing the contents to be opened even more easily.

Further, in the present second embodiment, the holding tab piece 18 is provided in such a manner that its center line C is arranged parallel to or substantially parallel to the central axis X of the spout-forming portion 13. Such a structure allows the force for pressing the bottom portion 14 of the bag container 30 against the surface-to-be-placed, which is exerted by holding the holding tab piece 18, to be transmitted to the surface-to-be-placed more easily. Thus, it becomes possible to oppose the momental force produced upon pulling up the opening tab piece 17 more effectively, thus allowing the easy-to-tear portion 15 to be torn in an even stabler state.

Note that the present invention is not limited to the foregoing embodiments and can be modified in various ways. For example, the opening tab portion does not necessarily have to have a substantially oval shape, and may have various other shapes, such as a substantially circular shape, a substantially elliptical shape, or a substantially rectangular shape. Further, the section having the circumferential edge portion with which the ball of a finger engages does not have to be an engagement hole provided passing from front to rear through the opening tab portion, and may also be, for example, an engagement depression that does not pass through the opening tab portion but is instead provided by forming the opening tab portion to have a considerable thickness. Furthermore, other than liquid agents such as shampoos and body wash, the contents enclosed in the bag container may be various other matters having flowability, such as gel-like matters, granular matters, and powdery matters.

Further, the opening tab portion and the holding tab portion do not necessarily have to be provided within a plane along the parting line of the mold for molding, and may deviate from the plane along the parting line to an extent that allows the effect of the present invention to be achieved. In other words, it will suffice if the opening tab portion and the holding tab portion are provided on one side, with respect to the central axis X of the spout-forming portion 13, toward the side surface of the body portion 12. Herein, the "side surface of the body portion 12" refers to the surface of the body portion that is visible when the container is viewed from the side in cases where the container has a flat shape that is broad when viewed from the front or the rear and narrow when viewed from the side (as with the container of the present embodiment), and refers to any surface of the body portion in cases where the container is, for example, a cylindrical container and does not have a flat shape.

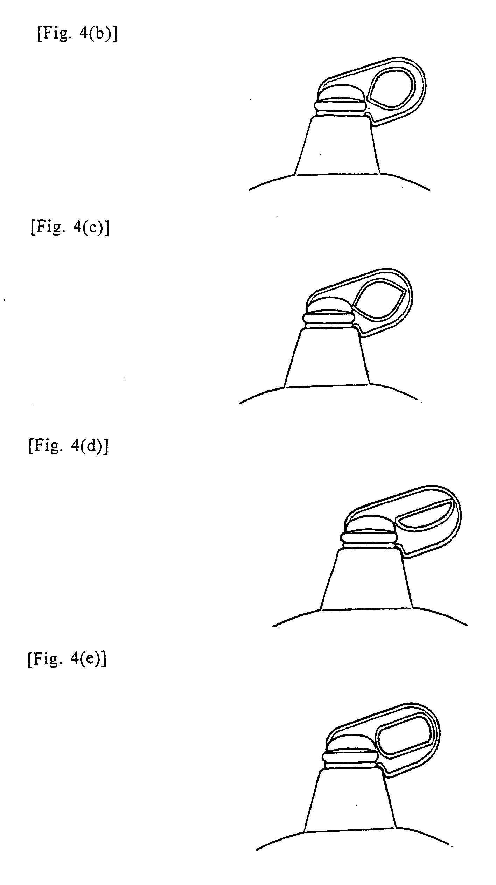

Further, the shape of the engagement hole or the engagement depression with which the ball of a finger engages while being oriented toward the circumferential direction centering about an end of the easy-to-tear portion does not necessarily have to be elliptical, as long as its minor-axis direction is provided along the circumferential direction centering about the end of the easy-to-tear portion. Furthermore, as regards the shape of the engagement hole or the engagement depression, what is important is the shape of the section on the side (the side of 24z in Fig. 3), with respect to an axis passing through the end of the easy-to-tear portion (i.e., the major axis), that is pulled up when pulling up the tab portion, and the shape on the opposite side, with respect to this axis, from the pulled-up side of the tab portion is not important. For example, as illustrated in Figs. 4(a) to 4(e), it is possible to adopt various other shapes-such as a substantially half-finger-like shape (see Fig. 4(a)), a teardrop shape (see Fig. 4(b)) or a lemon shape (see Fig. 4(c)) in which a portion of the above-described elliptical shape is made linear, a semicircular shape in which the upper half of the above-described elliptical shape is changed to a straight line that coincides with the Y direction (see Fig. 4(d)), or an oval-like shape in which a portion of each of the upper and lower sections of the above-described elliptical shape is changed to a straight line substantially parallel to the Y direction (see Fig. 4(e))-in which the section on the pulled-up side of the tab portion with respect to the major axis passing through the end of the easy-to-tear portion substantially matches the contour of the ball of a finger and in which the finger is guided in such a manner that the ball of the finger engages with the circumferential edge portion of the engagement hole or the engagement depression while the contour of the ball of the finger being oriented toward a substantially circumferential direction centering about the end of the easy-to-tear portion. That is, it will suffice if the shape can guide the finger in such a manner that the ball of the finger engages with the circumferential edge portion of the engagement hole or the engagement depression while being oriented toward the circumferential direction L. In cases where the shape of the engagement hole or the engagement depression is a perfect circle, it is difficult to efficiently transmit the pulling-up force as the tearing force because, as described above, it is difficult to determine the optimum direction for applying the tearing force and it is likely that the tab portion is pulled directly upward. However, the engagement hole or the engagement depression may be substantially circular, as long as the problem to be solved by the present invention can be solved. Furthermore, other than liquid agents such as shampoos and body wash, the contents enclosed in the bag container may be various other matters having flowability, such as gel-like matters, granular matters, and powdery matters.

Further, the bag container of the present invention does not have to be a self-standing bag.

Moreover, the opening tab portion does not necessarily have to be a ring-like tab piece having an engagement hole, and for example, it may be a plate-like tab portion having anti-slip depressions and/or projections on its front and back surfaces. Other than having a plate-like shape, the opening tab portion and the holding tab portion may be a projection-like or rod-like tab.

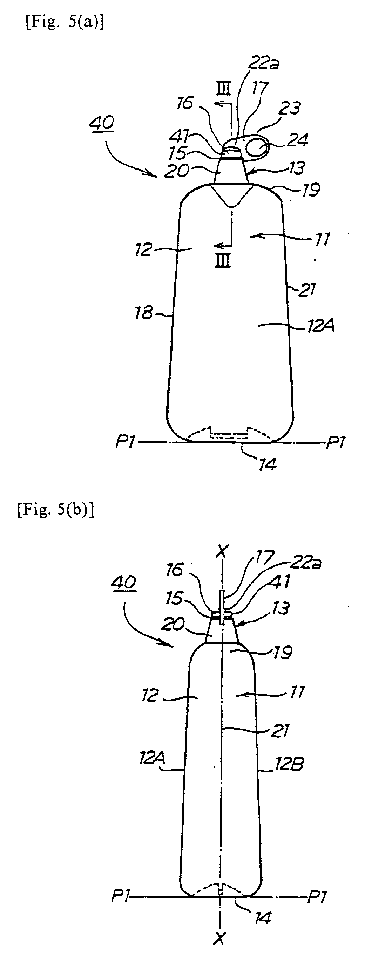

Figs. 5(a) and 5(b) illustrate a bag container 40 according to a preferred third embodiment of the present invention. Other than having a structure substantially similar to that of the bag container 10 of the foregoing first embodiment, the bag container 40 of the present third embodiment has a structure in which the to-be-torn-off portion 16 is provided with a flat-shaped dome portion 41 having a cavity inside and being adjacent to the easy-to-tear portion 15.

Further, an opening tab piece 17, serving as an opening tab portion, is provided on the to-be-torn-off portion 16 projecting on one side of the spout-forming portion 13 (in the present third embodiment, on the right-hand side toward the side surface of the body portion 12 with respect to the central axis X of the spout-forming portion 13 of Fig. 2) and is provided in a connected manner to a top surface 41 a and an outer circumference portion 41b of the dome portion 41. The opening tab piece 17 is provided integrally with the top surface 41 a and the outer circumference portion 41b of the dome portion 41. A portion (the lower portion) of the opening tab piece 17 is provided extending across the easy-to-tear portion 15 toward the base portion 20 of the spout-forming portion 13, but is continuous only to the to-be-torn-off portion 16.
The opening tab piece 17 is integrally molded with the dome portion 41 and the to-be-torn-off portion 16 when molding the bag container 40. Further, the opening tab piece 17 of the present embodiment is formed into a flat plate-like shape having a surface substantially orthogonal to the plane P2 parallel to the placing surface P1, and is provided within the plane along the parting line 21 of the mold for molding. Herein, the "plane along the parting line 21" is a virtual plane including the parting line 21.

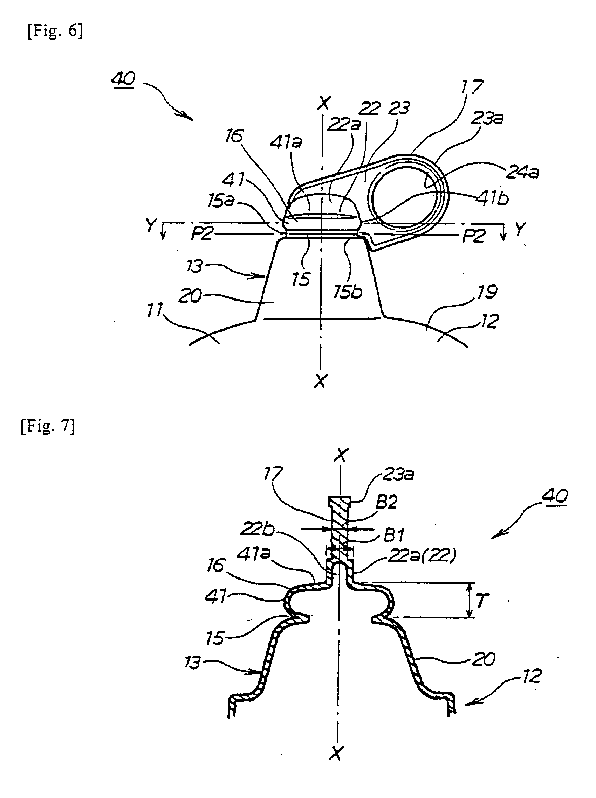

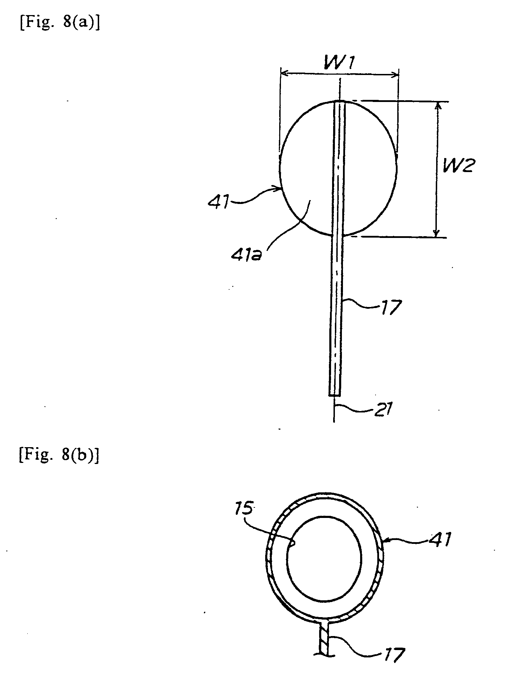

The dome portion 41 forms a part of the to-be-torn-off portion 16, and is provided in a connected manner above the base portion 20 via the easy-to-tear portion 15. As illustrated in Fig. 7, the height T of the dome portion 41 in the projecting direction of the spout-forming portion 13 is smaller than the width W1 or W2 (see Fig. 8(a)) of the dome portion 41 in a direction orthogonal to the projecting direction, and thus the dome portion 41 is formed having a flat shape.
The top surface 41a of the dome portion 41 is formed substantially flat. More specifically, it is formed having a curved surface that slightly rises upward at its central portion.
Further, the opening tab piece 17 is provided integrally on the upper face of the top surface 41 a, extending in the direction along the parting line 21 of the mold for molding (i.e., in the direction of the side edge of the front portion 12A or the back portion 12B).

As illustrated in Fig. 8(a), the dome portion 41 in the present third embodiment has a substantially circular plan shape, but the width W2 in the direction toward which the opening tab piece 17 extends is slightly larger than the width W1 in a direction orthogonal thereto.
It is preferable that the height T of the dome portion 41 in the projecting direction of the spout-forming portion 13 is 20% to 80%, and more preferably 25% to 50%, of the minimum width of the dome portion 41 in the direction orthogonal to the projecting direction (the width W1 in the present third embodiment).
The "minimum width in the direction orthogonal to the projecting direction" is the smaller of the width W2 in the direction toward which the opening tab piece 17 extends and the width W1 in the direction orthogonal thereto. Further, it is preferable that the width W2 in the direction toward which the opening tab piece 17 extends is 100% to 150%, and more preferably 110% to 130%, of the width W1 in the direction orthogonal thereto.

As illustrated in Fig. 8(b), within a cross section taken along a plane orthogonal to the central axis X of the spout-forming portion 13 -i.e., a cross section taken along a plane orthogonal to the height direction of the dome portion 41-, both the inner and outer surfaces of the dome portion 41 are substantially circular and are similar to each other. The interior of the dome portion 41 is formed having a flat cavity which has substantially the same shape as the outer shape of the dome portion 41. The cavity of the dome portion 41 is in communication with a cavity inside the base portion of the spout-forming portion 13 via a small-diameter section surrounded by the easy-to-tear portion 15.

The to-be-torn-off portion 16 having the dome portion 41 is arranged so as to cover the upper-end opening (spout) of the base portion 20, closing off the spout. The to-be-torn-off portion 16 having the dome portion 41, the base portion 20, and the easy-to-tear portion 15 are molded integrally.

The opening tab piece 17 is a portion functioning as an opening tab portion for tearing open the easy-to-tear portion 15. In the present embodiment, the opening tab piece 17 has a flat plate-like shape, and has a joint base-end portion 22 that forms a portion joined and connected to the dome portion 41, and an overhanging engagement portion 23 that is provided projecting from the joint base-end portion 22 on one side of the spout-forming portion 13. The overhanging engagement portion 23 has a substantially oval shape whose portion overlapping with the spout-forming portion 13 has been cut away. In other words, as described above, a portion (the lower portion) of the opening tab piece 17 is provided extending across the easy-to-tear portion 15 toward the base portion 20 of the spout-forming portion 13, but the opening tab piece 17 is continuous only to the to-be-torn-off portion 16.

The joint base-end portion 22 is a portion that is provided in a connected manner along the outer surface of the dome portion 41, and a portion thereof that is continuous with the upper face of the top surface 41 a of the dome portion 41 constitutes a connection base portion 22a having a cavity portion 22b. The connection base portion is a root portion where the joint base-end portion 22 is continuous with the upper face of the top surface 41a, and as illustrated in Fig. 7, the width B 1 of the outer circumference portion of the connection base portion is wider than the width B2 of the opening tab piece 17 when viewing the cross section thereof (i.e., when viewing a cross section formed by cutting the container along the direction of the above-described width W1 with a plane that contains the central axis X of the spout-forming portion). The difference between the width B2 of the opening tab piece 17 and the width B 1 of the outer circumference portion of the connection base portion 22a can be set as appropriate. In the present third embodiment, the difference B1-B2 is set to 1 to 2 mm. Further, in the present third embodiment, B 1 is set to 2 to 3 mm.
Providing the connection base portion 22a having the cavity portion 22b in a section of the joint base-end portion 22 that is continuous with the upper surface of the dome portion 41 effectively reinforces the section provided in a connected manner to the dome portion 41 without making the connection base portion 22a thick. This allows the pulling-up load exerted upon pulling up the opening tab piece 17 to tear the easy-to-tear portion 15 to be efficiently transmitted, as a compressive load, to a portion of the dome portion 41 located on the opposite side, with respect to the central axis X of the spout-forming portion 13, from the side toward which the overhanging engagement portion 23 projects. As a result, tearing can be initiated from the end 15b of the easy-to-tear portion 15 located on the side toward which the overhanging engagement portion 23 projects, while utilizing as a fulcrum the end 15a of the easy-to-tear portion 15 located on the opposite side, with respect to the central axis X of the spout-forming portion 13, from the side toward which the overhanging engagement portion 23 projects, thus making it possible to tear the easy-to-tear portion 15 more smoothly.

The reason why providing the connection base portion 22a having the cavity portion 22b in a section of the joint base-end portion 22 that is continuous with the upper surface of the dome portion 41 makes it possible to effectively reinforce the section provided in a connected manner to the dome portion 41, without increasing the thickness (equal to B1 described above) of the connection base portion 22a, is because the above-described section is substantially U-shaped when viewing the cross section of the connection base portion 22a as illustrated in Fig. 7, and is thus provided with a high-strength structure (similar to the structure of a C-channel steel materials). Furthermore, providing the cavity portion 22b can also achieve the effect of providing good moldability using a mold, such as allowing the molding cycle to be relatively shortened.

Further, assuming that the average wall thickness of the dome portion 41 is 1, the average wall thickness of the connection base portion 22a is around 0.8 to 2.
Since the connection base portion 22a does not have to be made too thick, it therefore becomes possible to achieve the effect of providing good moldability using a mold, such as allowing the molding cycle to be relatively shortened. The "wall thickness" of the connection base portion 22a and the dome portion 41 refers to a thickness of a wall that separates the cavity portion 22b or the cavity inside the dome portion 41 from the outside of the bag container 40.
In a cross section taken along a plane orthogonal to the central axis X of the spout-forming portion 13, the cavity portion 22b in the bag container 40 of the present third embodiment has a larger dimension in the direction along the parting line 21 than the dimension in the direction orthogonal to the parting line 21.

The cavity portion 22b or the cavity inside the dome portion 41 can be formed by appropriately designing the form of the mold cavity, and during the container-molding process, sandwiching a cylindrical parison with a pair of the molds and blowing the same.

The overhanging engagement portion 23 is a portion provided to project from the joint base-end portion 22 in such a manner as to overhang the upper area of the shoulder 19 of the container body 11, and its circumferential edge is formed as a thick rim portion 23a. Further, the overhanging engagement portion 23 has an elliptical engagement hole 24 opened in a portion on the tip-end side of the overhang, the circumferential edge of the opening of the engagement hole 24 being rimmed by a thick rim portion 24a.
Note that in cases where the bag container 40 is to be manufactured through blow molding, the hollow dome portion 41 is also a portion necessary for forming the spout.

The bag container 40 of the present third embodiment allows the operation of holding with the hand and pulling upward the opening tab piece 17 provided on the spout-forming portion 13 and thereby opening and forming a spout to be performed smoothly.

More specifically, according to the present third embodiment, the to-be-torn-off portion 16 is provided with a flat-shaped dome portion 41 having a cavity inside, and an opening tab piece 17 serving as an opening tab portion is provided in the above-described manner. Such a configuration, for example, makes the dome portion 41 less prone to deform compared to a non-flat-shaped dome portion at the time of performing the operation of tearing the easy-to-tear portion 15 to form an opening by placing a finger in engagement with the engagement hole 24 and pulling up the opening tab piece 17. This prevents stretching of the dome portion 41 etc., thus allowing the easy-to-tear portion 15 to be torn easily and smoothly.
Further, according to the present third embodiment, liquid is less prone to accumulate inside the flat-shaped dome portion 41 of the to-be-torn-off portion 16. Accordingly, in cases where the bag container 40 is to be used as a refill container for example, it is possible to prevent the contents from accumulating inside the to-be-torn-off portion 16 of the spout-forming portion during the period from when the contents are filled into the container until a consumer purchases the container and tears the easy-to-tear portion of the spout. Thus, it becomes possible to prevent problems, such as scattering of the contents that have accumulated inside the to-be-torn-off portion 16 onto the surroundings upon tearing the easy-to-tear portion and opening the spout.
Furthermore, providing the connection base portion 22a having the cavity portion 22b in a section of the joint base-end portion 22 that is continuous with the upper surface of the dome portion 41 allows the section provided in a connected manner to the dome portion 41 to be reinforced effectively, without increasing the thickness (equal to B 1 described above) of the connection base portion 22a.

The foregoing described the third embodiment of the present invention. The present invention, however, is not limited to the foregoing third embodiment and can be modified in various ways. For example, instead of the substantially circular shape, the shape of the dome portion as viewed from above can be a square, a rectangle, or a rhombus, each having rounded corners. Further, the connection base portion 22a having the cavity portion 22b as illustrated in Fig. 7 may be formed by pressurizing and squashing a part of the hollow dome portion 41 from both sides such that a space is left inside.

Further, the top surface 41 a of the dome portion 41 does not necessarily have to be formed having a curved surface that slightly rises upward at its central portion, and may instead be flat.

Furthermore, the opening tab portion may be provided in a state where it is connected only to the top surface of the dome portion.

The difference B1-B2 between the width B2 of the opening tab piece 17 and the width B1 of the outer circumference portion of the connection base portion 22a may be zero.

### Industrial Applicability

According to the bag container of the present invention, upon placing the ball of a finger in engagement with the engagement hole or the engagement depression provided in the tab portion of the spout-forming portion and pulling the tab portion upward, the pulling-up force can be transmitted efficiently as a force for tearing the easy-to-tear portion and thereby the operation of opening and forming a spout can be performed easily and smoothly.

Further, by providing the holding tab portion on the shoulder of the body portion on the side toward which the opening tab portion projects, the operation of holding and pulling upward the tab portion provided on the spout-forming portion and thereby opening and forming a spout can be performed in a stable state with the bottom portion being pressed against the surface-to-be-placed.

Furthermore, by forming the flat-shaped dome portion having the cavity inside on the to-be-torn-off portion, providing the opening tab portion in a connected manner to the top surface of the dome portion, and forming the portion of the opening tab portion that is provided in a connected manner to the dome portion as the connection base portion having a cavity portion, it becomes possible to prevent stretching of the to-be-torn-off portion etc. upon tearing, such as by ripping away or tearing away, the easy-to-tear portion of the spout-forming portion to form an opening, and to thus facilitate the tearing operation for forming the opening. Further, contents, such as liquid, are less prone to accumulate inside the to-be-torn-off portion.

Moreover, the bag container of the present invention provides good moldability using a mold, allowing the molding cycle to be relatively shortened, for example.

## Claims

1. A bag container (10, 30, 40) comprising a container body shaped by using a mold, the container body (11) being made of synthetic resin and having a body portion (12) including a bottom portion (14) and a spout-forming portion (13), a spout being formed by tearing an easy-to-tear portion (15) of the spout-forming portion (13) to tear off a to-be-torn-off portion (16) thereof, wherein:
the spout-forming portion (13) has a central axis (X) that is perpendicular or substantially perpendicular to a placing surface (P1) formed by the bottom portion (14), and is provided projecting upward from the body portion (12);
an opening tab portion (17) is provided on the to-be-torn-off portion (16), the opening tab portion (17) projecting on one side, with respect to the central axis (X) of the spout-forming portion (13), toward a side surface of the body portion (12), the opening tab portion (17) having an engagement hole (24) or an engagement depression with which the ball of a finger is to engage; and
the engagement hole (24) or the engagement depression has a shape that guides the finger in such a manner that, when the easy-to-tear portion (15) is to be torn, the ball of the finger engages with a circumferential edge portion (24a) of the engagement hole (24) or the engagement depression while being oriented toward a substantially circumferential direction (L) centering about an end (15a) of the easy-to-tear portion (15) located on an opposite side, with respect to the central axis (X), from the side toward which the opening tab portion (17) projects;
**characterized in that**
the opening tab portion (17) is provided projecting obliquely upward at an angle of inclination of 5 to 35 degrees with respect to a plane (P2) on which the easy-to-tear portion (15) is formed.

2. The bag container according to claim 1, wherein the engagement hole (24) or the engagement depression has an elliptical shape, and a direction of a minor axis (Z) of the ellipse is provided along the circumferential direction (L) centering about the end (15a) of the easy-to-tear portion (15).

3. The bag container according to claim 1 or 2, wherein a holding tab portion (18) is provided on a shoulder (19) of the body portion (12) adjacent to the spout-forming portion (13) on the side toward which the opening tab portion (17) projects, the holding tab portion (18) projecting upward while being spaced apart from the spout-forming portion (13).

4. The bag container according to claim 3, wherein the holding tab portion (18) is provided in such a manner that a central axis (C) thereof is arranged parallel to or substantially parallel to the central axis (X) of the spout-forming portion (13).

5. The bag container according to claim 3 or 4, wherein the opening tab portion (17) and the holding tab portion (18) are provided within a plane along a parting line (21) of the mold for the shaping.

6. The bag container according to any one of claims 1 to 5, wherein:
the to-be-torn-off portion (16) is provided with a flat-shaped dome portion (41) having a cavity inside;
the opening tab portion (17) is provided projecting on one side, with respect to the central axis of the spout-forming portion (13), toward the side surface of the body portion (12) and is provided in a connected manner to a top surface (41a) of the dome portion (41); and
a portion of the opening tab portion (17) that is provided in a connected manner to the top surface (41a) of the dome portion (41) constitutes a connection base portion having a cavity portion.

7. The bag container according to claim 6, wherein a height (T) of the dome portion (41) in a projecting direction of the spout-forming portion (13) is 20% to 80% of a minimum width of the dome portion (41) in a direction orthogonal to the projecting direction.

8. The bag container according to any one of claims 1 to 7, wherein the easy-to-tear portion (15) has a narrow groove-like depression formed annularly around the spout-forming portion (13).

## Patentansprüche

1. Beutelbehälter (10, 30, 40) mit einem Behälterkörper, der mit Hilfe einer Form geformt ist, wobei der Behälterkörper (11) aus Kunstharz hergestellt ist und einen Körperabschnitt (12) hat, der einen Bodenabschnitt (14) und einen Ausgussbildungsabschnitt (13) aufweist, wobei ein Ausguss durch Reißen eines leicht reißbaren Abschnitts (15) des Ausgussbildungsabschnitts (13) gebildet wird, um einen abzureißenden Abschnitt (16) davon abzureißen, wobei:
der Ausgussbildungsabschnitt (13) eine Mittelachse (X) hat, die senkrecht oder im Wesentlichen senkrecht zu einer Aufstellfläche (P1) ist, die durch den Bodenabschnitt (14) gebildet ist, und vom Körperabschnitt (12) nach oben vorstehend vorgesehen ist;
ein Öffnungslaschenabschnitt (17) am abzureißenden Abschnitt (16) vorgesehen ist, wobei der Öffnungslaschenabschnitt (17) auf einer Seite im Hinblick auf die Mittelachse (X) des Ausgussbildungsabschnitts (13) zu einer Seitenfläche des Körperabschnitts (12) vorsteht, wobei der Öffnungslaschenabschnitt (17) ein Eingriffsloch (24) oder eine Eingriffsvertiefung hat, in das (die) der Ballen eines Fingers eingreifen soll; und
das Eingriffsloch (24) oder die Eingriffsvertiefung eine Form hat, die den Finger so führt, dass wenn der leicht reißbare Abschnitt (15) gerissen werden soll, der Ballen des Fingers einen Eingriff mit einem Umfangskantenabschnitt (24a) des Eingriffslochs (24) oder der Eingriffsvertiefung herstellt, während er im Wesentlichen in Umfangsrichtung (L) in Zentrierung um ein Ende (15a) des leicht reißbaren Abschnitts (15) orientiert ist, das auf einer entgegengesetzten Seite im Hinblick auf die Mittelachse (X) von der Seite liegt, zu der der Öffnungslaschenabschnitt (17) vorsteht;
**dadurch gekennzeichnet, dass**
der Öffnungslaschenabschnitt (17) schräg nach oben in einem Neigungswinkel von 5 bis 35 Grad im Hinblick auf eine Ebene (P2) vorstehend vorgesehen ist, auf der der leicht reißbare Abschnitt (15) gebildet ist.

2. Beutelbehälter nach Anspruch 1, wobei das Eingriffsloch (24) oder die Eingriffsvertiefung eine elliptische Form hat und eine Richtung einer Nebenachse (Z) der Ellipse entlang der Umfangsrichtung (L) in Zentrierung um das Ende (15a) des leicht reißbaren Abschnitts (15) vorgesehen ist.

3. Beutelbehälter nach Anspruch 1 oder 2, wobei ein Haltelaschenabschnitt (18) auf einer Schulter (19) des Körperabschnitts (12) benachbart zum Ausgussbildungsabschnitt (13) auf der Seite vorgesehen ist, zu der der Öffnungslaschenabschnitt (17) vorsteht, wobei der Haltelaschenabschnitt (18) nach oben vorsteht, während er vom Ausgussbildungsabschnitt (13) beabstandet ist.

4. Beutelbehälter nach Anspruch 3, wobei der Haltelaschenabschnitt (18) so vorgesehen ist, dass eine Mittelachse (C) davon parallel oder im Wesentlichen parallel zur Mittelachse (X) des Ausgussbildungsabschnitts (13) angeordnet ist.

5. Beutelbehälter nach Anspruch 3 oder 4, wobei der Öffnungslaschenabschnitt (17) und der Haltelaschenabschnitt (18) in einer Ebene entlang einer Trennlinie (21) der Form zur Formgebung vorgesehen sind.

6. Beutelbehälter nach einem der Ansprüche 1 bis 5, wobei:
der abzureißende Abschnitt (16) mit einem flachförmigen Kuppelabschnitt (41) versehen ist, der einen Hohlraum im Inneren hat;
der Öffnungslaschenabschnitt (17) auf einer Seite im Hinblick auf die Mittelachse des Ausgussbildungsabschnitts (13) zur Seitenfläche des Körperabschnitts (12) vorstehend vorgesehen ist und auf verbundene Weise an einer Oberseite (41a) des Kuppelabschnitts (41) vorgesehen ist; und
ein Abschnitt des Öffnungslaschenabschnitts (17), der auf verbundene Weise an der Oberseite (41a) des Kuppelabschnitts (41) vorgesehen ist, einen Verbindungsbasisabschnitt mit einem Hohlraumabschnitt bildet.

7. Beutelbehälter nach Anspruch 6, wobei eine Höhe (T) des Kuppelabschnitts (41) in Vorsprungrichtung des Ausgussbildungsabschnitts (13) 20 % bis 80 % einer minimalen Breite des Kuppelabschnitts (41) in senkrechter Richtung zur Vorsprungrichtung beträgt.

8. Beutelbehälter nach einem der Ansprüche 1 bis 7, wobei der leicht reißbare Abschnitt (15) eine schmale nutartige Vertiefung hat, die um den Ausgussbildungsabschnitt (13) ringförmig gebildet ist.

## Revendications

1. Récipient en forme de sac (10, 30, 40) comprenant un corps de récipient formé à l'aide d'un moule, le corps de récipient (11) étant réalisé à partir de résine synthétique et ayant une partie de corps (12) comprenant une partie de fond (14) et une partie formant bec verseur (13), un bec verseur étant formé en déchirant une partie facile à déchirer (15) de la partie formant bec verseur (13) pour déchirer sa partie à déchirer (16), dans lequel :
la partie formant bec verseur (13) a un axe central (X) qui est perpendiculaire ou sensiblement perpendiculaire à une surface de mise en place (P1) formée par la partie de fond (14), et est prévue en saillie vers le haut à partir de la partie de corps (12) ;
une partie de languette d'ouverture (17) est prévue sur la partie à déchirer (16), la partie de languette d'ouverture (17) faisant saillie d'un côté, par rapport à l'axe central (X) de la partie formant bec verseur (13), vers une surface latérale de la partie de corps (12), la partie de languette d'ouverture (17) ayant un trou de mise en prise (24) ou une dépression de mise en prise avec lequel/laquelle la partie charnue d'un doigt doit se mettre en prise ; et
le trou de mise en prise (24) ou la dépression de mise en prise a une forme qui guide le doigt de sorte que, lorsque la partie facile à déchirer (15) doit être déchirée, la partie charnue du doigt se met en prise avec la partie de bord circonférentiel (24a) du trou de mise en prise (24) ou la dépression de mise en prise tout en étant orientée vers une direction sensiblement circonférentielle (L) se centrant autour d'une extrémité (15a) de la partie facile à déchirer (15) positionnée sur un côté opposé, par rapport à l'axe central (X), à partir du côté vers lequel la partie de languette d'ouverture (17) fait saillie ;
**caractérisé en ce que** :
la partie de languette d'ouverture (17) est prévue en saillie de manière oblique vers le haut selon un angle d'inclinaison de 5 à 35 degrés par rapport à un plan (P2) sur lequel la partie facile à déchirer (15) est formée.

2. Récipient en forme de sac selon la revendication 1, dans lequel le trou de mise en prise (24) ou la dépression de mise en prise a une forme elliptique et une direction d'un axe mineur (Z) de l'ellipse est prévue le long de la direction circonférentielle (L) se centrant autour de l'extrémité (15a) de la partie facile à déchirer (15).

3. Récipient en forme de sac selon la revendication 1 ou 2, dans lequel une partie de languette de maintien (18) est prévue sur un épaulement (19) de la partie de corps (12) adjacente à la partie formant bec verseur (13) sur le côté vers lequel la partie de languette d'ouverture (17) fait saillie, la partie de languette de maintien (18) fait saillie vers le haut tout en étant éloignée de la partie formant bec verseur (13).

4. Récipient en forme de sac selon la revendication 3, dans lequel la partie de languette de maintien (18) est prévue de sorte que son axe central (C) est agencé parallèlement à ou sensiblement parallèlement à l'axe central (X) de la partie formant bec verseur (13).

5. Récipient en forme de sac selon la revendication 3 ou 4, dans lequel la partie de languette d'ouverture (17) et la partie de languette de maintien (18) sont prévues à l'intérieur d'un plan le long d'une ligne de joint (21) du moule pour le formage.

6. Récipient en forme de sac selon l'une quelconque des revendications 1 à 5, dans lequel :
la partie à déchirer (16) est prévue avec une partie en forme de dôme plat (41) ayant une cavité à l'intérieur ;
la partie de languette d'ouverture (17) est prévue en saillie sur un côté, par rapport à l'axe central de la partie formant bec verseur (13), vers la surface latérale de la partie de corps (12) et est prévue d'une manière raccordée à une surface supérieure (41a) de la partie de dôme (41) ; et
une partie de la partie de languette d'ouverture (17) qui est prévue d'une manière raccordée à la surface supérieure (41a) de la partie de dôme (41) constitue une partie de base de raccordement ayant une partie de cavité.

7. Récipient en forme de sac selon la revendication 6, dans lequel une hauteur (T) de la partie de dôme (41) dans une direction de saillie de la partie formant bec verseur (13) représente de 20% à 80% d'une largeur minimum de la partie de dôme (41) dans une direction orthogonale à la direction de saillie.

8. Récipient en forme de sac selon l'une quelconque des revendications 1 à 7, dans lequel la partie facile à déchirer (15) a une dépression en forme de rainure étroite formée de manière annulaire autour de la partie formant bec verseur (13).
